# DEMANDE DE BREVET EUROPEEN

(11) **EP 4 450 766 A1**
(43) Date de publication de la demande: **23.10.2024**
(21) Numéro de dépôt: 24171218.1
(22) Date de dépôt: 19.04.2024
(51) Int. Cl.: F01D 5/30, B23K 20/12, F01D 5/34, B23P 15/00

(54) **PROCÉDÉ DE DIMENSIONNEMENT DE MOIGNONS D'UN DISQUE AUBAGÉ DE TURBOMACHINE DESTINÉS AU SOUDAGE ORBITAL**

(30) Priorité: 21.04.2023 BE 202305296
(71) Demandeur: Safran Aero Boosters, 4041 Herstal (BE)
(72) Inventeur: PANCRACE, Johann, 4041 Herstal (BE)
(74) Mandataire: Lecomte & Partners

(57) **Abrégé**

L'invention propose un procédé de dimensionnement d'une section (S) de jonction (10) par soudure par friction orbitale entre une aube (4) et un moignon (6) d'un disque aubagé pour turbomachine, remarquable en ce que la section est dimensionnée de manière à ce que le rapport entre une longueur moyenne de rayons s'étendant totalement dans la section depuis un point à la périphérie de ladite section et balayant ladite section, où ladite longueur moyenne de rayons est une longueur moyenne maximale *zₘₐₓ*, et une longueur moyenne de rayons s'étendant totalement dans la section depuis un autre point à la périphérie de ladite section et balayant ladite section, où ladite longueur moyenne est une longueur moyenne minimale *zₘᵢₙ*, est inférieur ou égal à 2.

## Description

### Domaine technique

L'invention a trait à un procédé de fabrication d'un disque aubagé pour turbomachine, et plus particulièrement à un procédé de fabrication d'un disque aubagé par soudage par friction orbitale d'aubes à un disque rotorique de turbomachine. L'invention a également trait à un procédé de formation de moignons ainsi qu'à une aube et un disque rotorique comprenant un moignon formé par ledit procédé.

### Art antérieur

Le changement climatique est une préoccupation majeure pour de nombreux organes législatifs et de régulation à travers le monde. En effet, diverses restrictions sur les émissions de carbone ont été, sont ou seront adoptées par divers états. En particulier, une norme ambitieuse s'applique à la fois aux nouveaux types d'avions mais aussi à ceux en circulation nécessitant de devoir mettre en oeuvre des solutions technologiques afin de les rendre conformes aux réglementations en vigueur. L'aviation civile se mobilise depuis maintenant plusieurs années pour apporter une contribution à la lutte contre le changement climatique.

Les efforts de recherche technologique ont déjà permis d'améliorer de manière très significative les performances environnementales des avions. La Déposante prend en considération les facteurs impactant dans toutes les phases de conception et de développement pour obtenir des composants et des produits aéronautiques moins énergivores, plus respectueux de l'environnement et dont l'intégration et l'utilisation dans l'aviation civile ont des conséquences environnementales modérées dans un but d'amélioration de l'efficacité énergétique des avions.

Par voie de conséquence, la Déposante travaille en permanence à la réduction de son incidence climatique négative par l'emploi de méthodes et l'exploitation de procédés de développement et de fabrication vertueux et minimisant les émissions de gaz à effet de serre au minimum possible pour réduire de l'empreinte environnementale de son activité.

Ces travaux de recherche et de développement soutenus portent à la fois sur les nouvelles générations de moteurs d'avions, l'allègement des appareils, notamment par les matériaux employés et les équipements embarqués allégés, le développement de l'emploi des technologies électriques pour assurer la propulsion, et, indispensables compléments aux progrès technologiques, les biocarburants aéronautiques.

A cet effet, l'invention est le résultat des recherches technologiques visant à améliorer de manière très significative les performances des avions et, en ce sens, contribue à la réduction de l'impact environnemental des avions.

Dans ce contexte, l'invention vise un procédé de soudage par friction orbitale pour la réalisation d'un disque aubagé (communément désigné par : « blisk ») ou un tambour aubagé (communément désigné par « blum ») de compresseur de turbomachine.

Le soudage par friction orbitale est un procédé de soudage dans lequel les pièces à assembler sont mises en contact sous effort et soudées par une mise en mouvement circulaire généralement définit par un excentrique, et accompagné d'une vitesse tangentielle uniforme, de manière à générer un frottement et un échauffement homogène au niveau d'une jonction de soudure entre les deux pièces.

Il est par ailleurs connu d'avoir recours au soudage par friction linéaire, il s'agit d'un procédé de soudage dans lequel la chaleur nécessaire est créée par un mouvement de va-et-vient des interfaces à souder. Cependant, le soudage par friction orbital présente plusieurs avantages par rapport à la friction linéaire, par exemple, le mouvement relatif entre les deux interfaces est continu grâce au mouvement de friction circulaire, ce qui apporte une meilleure homogénéité thermique. Contrairement au mouvement linéaire pour lequel la vitesse relative des deux pièces devient nulle à chaque demi-période d'oscillation. De plus, le temps de cycle d'un soudage orbital est considérablement inférieur à celui du soudage par friction linéaire (respectivement environ 2 minutes comparé à environ 5 minutes).

Le document de brevet publié EP 2 535 516 A1 divulgue un procédé de soudage par friction orbitale d'aubes à un rotor de turbomachine dans lequel, une fois une consommation matière est atteinte dans une zone de soudage entre l'aube et le disque, le mouvement orbital est stoppé à une position de référence, et un effort de forgeage est exercé sur l'aube contre le rotor afin de finaliser la soudure.

Après la soudure, un usinage évolutif s'adaptant à la surface externe de l'aube est ensuite réalisé afin d'enlever la matière de l'interface qui aura été repoussée par l'extérieur lors du soudage (communément désignée par : « flash »), de manière à éviter tout ressaut lié à l'usinage.

Toutefois, le soudage peut révéler une jonction de soudure de l'aube avec le disque rotorique qui risque de présenter des défauts structurels et/ou des défauts de santé matière.

Le document de brevet publié EP 1 495 829 A1 divulgue un procédé de fabrication d'aubes et disques combinés profilés, dans lequel chacune des aubes présente un moignon à souder au disque par friction linéaire. Le document propose une conception du moignon comprenant un rapport de la partie la plus large sur la partie la plus étroite dudit moignon qui soit inférieure à 2 pour minimiser sa cambrure. Le document propose également une forme particulière aux extrémités du moignon qui suit une direction tangentielle d'oscillation linéaire lors du soudage par friction linéaire.

Cependant, la conception du moignon proposé par le document présente une marge d'amélioration, car elle ne peut pas être appliquée au soudage orbital. En effet, un tel moignon ne permet pas d'obtenir une jonction soudée par un soudage orbital qui soit saine et exempte de contaminants.

### Résumé de l'invention

### Problème technique

L'invention a pour objectif de résoudre au moins un des problèmes posés par l'art antérieur. Plus précisément, l'invention a pour objectif de proposer une section de jonction d'une aube et d'un moignon de disque permettant de maîtriser et d'optimiser le soudage orbital afin d'obtenir une jonction soudée saine et exempte de contaminants.

### Solution technique

La présente invention a pour objet un procédé de dimensionnement d'une section de jonction par soudure par friction orbitale entre une aube et un moignon d'un disque aubagé pour turbomachine, remarquable en ce que la section est dimensionnée de manière à ce que le rapport entre une longueur moyenne de rayons s'étendant totalement dans la section depuis un point à la périphérie de ladite section et balayant ladite section, où ladite longueur moyenne de rayons est une longueur moyenne maximale *zₘₐₓ*, et une longueur moyenne de rayons s'étendant totalement dans la section depuis un autre point à la périphérie de ladite section et balayant ladite section, où ladite longueur moyenne est une longueur moyenne minimale *zₘᵢₙ*, est inférieur ou égal à 2.

Selon un mode avantageux de l'invention, l'autre point à la périphérie de la section où la longueur moyenne de rayons est maximale *zₘₐₓ* est situé à distance de deux extrémités de la section, suivant une corde de l'aube correspondante, et correspondant à un bord d'attaque et à un bord de fuite de ladite aube correspondante.

Selon un mode avantageux de l'invention, le point à la périphérie de la section où la longueur moyenne de rayons est minimale *zₘᵢₙ* est situé à une extrémité de la section, suivant une corde de l'aube correspondante et correspondant à un bord d'attaque ou à un bord de fuite de ladite aube correspondante.

Selon un mode avantageux de l'invention, la section des moignons au niveau de la jonction avec les aubes est dimensionnée en élargissant ladite section par rapport à une section finale après jonction des aubes et usinage.

Selon un mode avantageux de l'invention, la section des moignons au niveau de la jonction avec les aubes est élargie par rapport à la section finale à au moins une des deux extrémités de la section.

Alternativement, la section des moignons au niveau de la jonction avec les aubes est élargie par rapport à la section finale à une portion centrale entre un bord d'attaque et un bord de fuite des aubes, au niveau d'une portion concave de la section.

Selon un mode avantageux de l'invention, le dimensionnement de la section des moignons au niveau de la jonction avec les aubes comprend un calcul de la longueur moyenne de rayons pour une série de points distribués le long de la périphérie, respectivement et une détermination de la longueur moyenne de rayons maximale *zₘₐₓ* et de la longueur moyenne de rayons minimale *zₘᵢₙ* parmi les longueurs moyennes de rayons de la série de points.

Selon un mode avantageux de l'invention, le dimensionnement de la section des moignons au niveau de la jonction avec les aubes comprend une détermination de la longueur moyenne de rayons maximale *zₘₐₓ* et de la longueur moyenne de rayons minimale *zₘᵢₙ* pour différentes sections, de manière itérative.

L'invention concerne également un procédé de fabrication d'un disque aubagé de turbomachine comprenant les étapes suivantes : mise à disposition d'un disque avec des moignons ; jonction d'aubes aux moignons par soudure par friction orbitale ; remarquable en ce que les moignons du disque sont dimensionnés suivant le procédé de dimensionnement selon l'invention.

Selon un mode avantageux de l'invention, les moignons sont dimensionnés selon le procédé de dimensionnement de l'invention et comprenant l'étape supplémentaire : usinage des moignons et des aubes jointes aux moignons de manière à retirer l'élargissement et arriver à la section finale.

L'invention concerne également un disque rotorique destiné à la fabrication d'un disque aubagé pour une turbomachine, le disque rotorique comprenant une surface externe pourvue d'une rangée annulaire de moignons s'étendant radialement depuis ladite surface externe, chacun des moignons comprenant une section destinée à être soudée par friction orbitale avec une aube, remarquable en ce que lesdits moignons sont dimensionnés par le procédé de dimensionnement selon l'invention.

Selon un mode avantageux de l'invention, la section est comprise entre 200 mm² et 7000 mm².

Selon un mode avantageux de l'invention, la section est comprise entre 2000 mm² et 3000 mm².

L'invention concerne également une aube destinée à la fabrication d'un disque aubagé pour une turbomachine, l'aube comprenant une face destinée à être soudée par friction orbitale avec un disque rotorique, remarquable en ce que ladite face présente une section dimensionnée par le procédé de dimensionnement selon l'invention.

Selon un mode avantageux de l'invention, la section est comprise entre 200 mm² et 7000 mm².

Selon un mode avantageux de l'invention, la section est comprise entre 2000 mm² et 3000 mm².

Les mesures de l'invention sont avantageuses en ce que le dimensionnement de la section de jonction en respectant le rapport de la longueur moyenne maximale *zₘₐₓ* sur la longueur moyenne minimale *zₘᵢₙ* qui soit inférieur ou égal à 2, permet de garantir une surface de contact lors du soudage assurant une meilleure homogénéité du malaxage de la matière, résultant en une soudure résistante et plus robuste.

En effet, l'évolution des rayons s'étendant et balayant totalement la section à souder depuis un point à sa périphérie, représente physiquement l'homogénéité de la longueur à cisailler durant le mouvement orbital et donc l'homogénéité du débit de matière expulsée dans le flash le long du contour de l'aube. Il est représentatif de l'homogénéité d'éjection de contaminants de la soudure.

De plus, le moignon dimensionné par le procédé de l'invention comprend une raideur améliorée.

Il est entendu que chaque détail d'un mode de réalisation ci-dessous peut être combiné à chaque autre détail des autres modes de réalisation.

### Brève description des dessins

La figure 1 illustre un disque rotorique comprenant un moignon s'étendant radialement depuis une surface externe dudit disque, et une aube comprenant une face présentant une section de jonction destinée à être soudée par friction orbitale au moignon du disque ;
La figure 2 illustre de manière schématique une première section modélisée de l'aube et/ou du moignon destinée à être dimensionnée pour former la section de jonction visible à la figure 1 ;
La figure 3 illustre la première section modélisée de la figure 2 lors d'une détermination d'une longueur moyenne *z_{A}* de rayons *z_{A,α}* balayant ladite section à partir d'un point A de la périphérie de ladite section ;
La figure 4 illustre la première section modélisée de la figure 2 lors d'une détermination d'une longueur moyenne za de rayons *z_{B,α}* balayant ladite section à partir d'un point *B* de la périphérie de ladite section ;
La figure 5 illustre une deuxième section modélisée, résultant d'un élargissement au droit des extrémités de la première section modélisée de la figure 2 ;
La figure 6 illustre une alternative de la deuxième section modélisée, résultant d'un élargissement au droit d'une portion concave de la première section modélisée de la figure 2 ;
La figure 7 représente de manière schématique une vue en perspective, lors de la soudure à friction orbitale, de l'aube au moignon du disque, au moyen de la section de jonction ;
La figure 8 représente trois modélisations de sections différentes comprenant un surplus de matière présenté autour d'un profil aérodynamique d'une pale qui n'est pas représentée ;
La figure 9 représente des mouvements relatifs de deux sections de l'art antérieur comprenant un surplus de matière formant un angle droit parallèle à la direction d'oscillation lors d'un soudage par friction linéaire ;
La figure 10 représente des mouvements relatifs de deux sections selon l'invention lors du soudage par friction orbitale ;
La figure 11 illustre un graphique indiquant, pour différentes valeurs du rapport *zₘₐₓ*/*zₘᵢₙ*, l'évolution des particules de contaminants au niveau des surfaces de contact initial pendant le soudage orbital entre l'aube et le moignon de disque correspondant, en fonction d'une consommation de matière lors dudit soudage orbital.

### Description détaillée des modes de réalisation

Dans la description qui va suivre, les termes « interne » et « externe » renvoient à un positionnement par rapport à l'axe de rotation d'une turbomachine axiale et/ou à un axe central d'un disque rotorique aubagé. La direction axiale correspond à la direction le long de l'axe de rotation de la turbomachine, les longueurs étant mesurées axialement. Les largeurs sont mesurées selon la circonférence. La direction radiale est perpendiculaire à l'axe de rotation. L'amont et l'aval sont en référence au sens d'écoulement principal du flux dans la turbomachine.

Les dimensions des figures ne sont pas à l'échelle et en particulier les épaisseurs ou les dimensions radiales sont exagérées pour faciliter la lecture des figures.

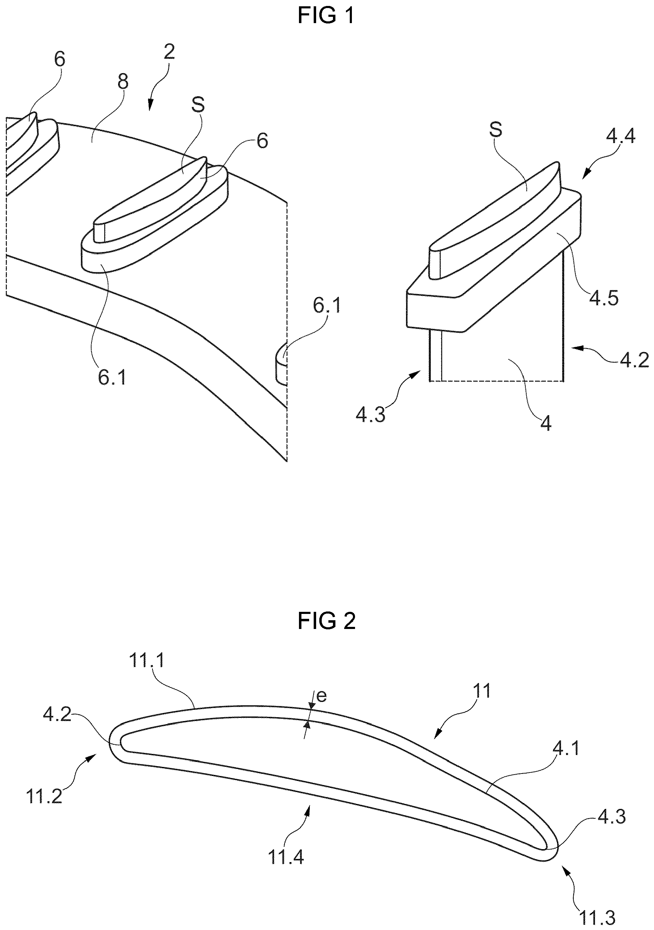

La figure 1 illustre un disque rotorique 2 comprenant un moignon 6 s'étendant radialement depuis une surface externe 8 dudit disque 2, et une aube 4 comprenant une face S présentant une section de jonction S destinée à être soudée par friction orbitale au moignon 6 du disque 2, et précisément soudée à une section de jonction S identique dudit moignon 6. Les deux sections de jonction S sont planes. Le soudage par friction orbitale sera expliqué plus loin dans la présente description.

Le disque rotorique 2 comprend une rangée annulaire de moignons 6 destinés à être soudés avec des aubes 4 correspondants, de manière à former un disque aubagé de turbomachine. Chaque aube 4 comprend une extrémité inférieure 4.4 ayant une forme identique au moignon 6 du disque 2. Il est donc généralement considéré que l'aube 4 comprend un moignon à son extrémité inférieure 4.4. Préférentiellement, le disque aubagé est une roue mobile destinée à être disposée en amont d'un bec de séparation de flux d'air dans la turbomachine. A cet effet, la surface externe 8 correspond à une surface de guidage d'air d'une veine de fluide le long et au travers d'un rotor. Alternativement, le disque aubagé peut correspondre à un rotor de type tambour appartenant à un compresseur haute-pression ou basse-pression.

De préférence, le disque aubagé est un disque dit : « bi-matériaux » comprenant deux alliages de titane différents. Par exemple, les aubes 4 peuvent être fabriquées à partir d'un alliage Ta6v, et le disque rotorique 2 à partir d'un des alliages suivants : Ti17, Ti575, Ti1023.

De manière avantageuse, le mélange des deux alliages de titane différents (Ta6v et Ti17) présente une usinabilité plus aisée, et permet d'atteindre un gain en masse par rapport à une solution basée, par exemple, uniquement sur un alliage en Ti17, cela est notamment dû à une densité du Ta6v qui est légèrement plus faible que celle du Ti17.

En effet, l'alliage Ti17 a été préférentiellement choisi pour la partie disque pour ces bonnes caractéristiques en fatigue HCF (acronyme anglais de : « High Cycle Fatigue ») et LFC (« Low Cycle Fatigue »). Un disque en Ti17 affichera également une plus grande marge en vitesse d'éclatement qu'un disque en Ta6v. Pour les aubes, l'alliage Ta6v a été choisi car permet de procurer aux aubes une élongation à rupture plus élevée (meilleure tenue aux impacts), et un meilleur comportement en propagation de fissures qui se traduit par une meilleure durabilité aux impacts basse énergie.

Dans la configuration illustrée à la figure 1, l'aube 4 est illustrée suivant une direction radiale opposée à celle lors du soudage afin de mieux visualiser la section de jonction S au pied de ladite aube 4.

Préférentiellement, le moignon 6 présente également la section de jonction S qui est identique à celle de l'aube 4. Avantageusement, la section S est dimensionnée suivant un procédé de dimensionnement des moignons qui sera expliqué suivant les figures 2 à 5.

La figure 2 illustre de manière schématique une première section modélisée 11 de l'aube et/ou du moignon destinée à être dimensionnée pour former la section de jonction S visible à la figure 1.

Le dimensionnement de la section de jonction est réalisé suivant le procédé de dimensionnement des moignons qui comprend préférentiellement une première étape de modélisation d'une première section 11 à partir d'un profil aérodynamique 4.1 de l'aube, ledit profil 4.1 correspond au profil final de l'aube après usinage.

De préférence, la première section 11 comprend un élargissement du profil 4.1 au moyen d'une surépaisseur e correspondant, de préférence, à un excentrique e du mouvement d'oscillation orbital lors du soudage par friction orbitale.

L'excentrique e correspond à la valeur de décalage de l'outil (de maintien de l'aube) et le disque par rapport à un centre de référence, permettant de créer le mouvement d'oscillation orbital. En d'autres termes, l'excentrique correspond à la distance entre l'axe de rotation de l'outil et le point central autour duquel il effectue son mouvement orbital.

L'illustration de la section 11 est schématique, la surépaisseur e n'est pas forcément constante autour du profil 4.1, celle-ci peut présenter des variations autour dudit profil 4.1.

Le procédé de dimensionnement des moignons comprend une deuxième étape de détermination d'un rapport entre une longueur moyenne maximale *zₘₐₓ* et une longueur moyenne minimale *zₘᵢₙ.*

A cet égard, la deuxième étape comprend la détermination de longueurs moyennes *zᵢ* balayant la première section 11 en tout point i de la périphérie 11.1 de ladite section 11.

En effet, chacune des longueurs moyennes *zᵢ* correspond à une longueur moyenne *zᵢ* de rayons *z_{i,α}* s'étendant totalement dans la première section 11 depuis un point *i* à la périphérie 11.1 et balayant ladite section 11. Préférentiellement, les rayons *z_{i,α}* correspondent à des projections du point *i* sur toute une portion de la périphérie 11.1 qui est en regard avec ledit point i.

La détermination des longueurs moyennes maximale *zₘₐₓ* et minimale *zₘᵢₙ* nécessite la détermination de la longueur moyenne *zᵢ* pour chacun des points *i* sur la totalité de la périphérie 11.1. De préférence, une telle détermination est une démarche automatisée au moyen d'un algorithme informatique. A cet égard, un algorithme appliquant une méthode de type : « lancer de rayon » peut être adapté, ce dernier étant également connu sous le nom anglais « ray tracing ».

Avantageusement, les inventeurs ont judicieusement adopté une approche novatrice en introduisant la technique du lancer de rayons (ray tracing), qui est jusqu'à présent inconnue dans le domaine de la mécanique. Ils ont réalisé que c'est le moyen optimal de caractériser cette section afin de la dimensionner de manière à optimiser le soudage orbital et ainsi réduire la présence de contaminants dans la soudure. Cette méthode sera détaillée dans la suite de la présente description.

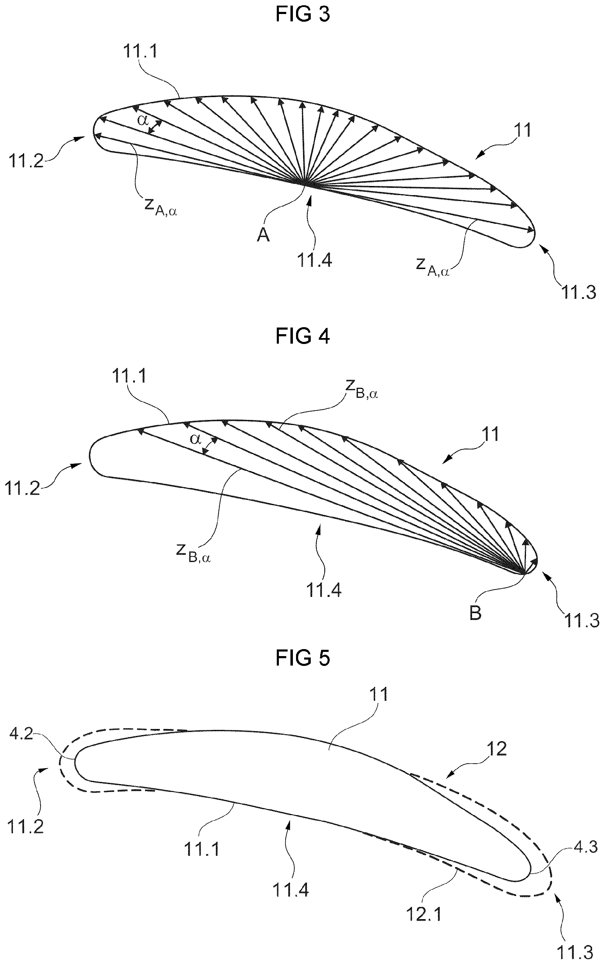

Les figures 3 et 4 illustrent un exemple de projection de rayons *z_{A,α}* et *z_{B,α},* respectivement, à partir des points A et B de la périphérie 11.1.

La méthode de lancer de rayons sur la section 11 peut être réalisée suivant les étapes suivantes :
- modéliser une première section 11 (visible à la figure 2) basée sur le profil aérodynamique 4.1 final de l'aube avec l'ajout de la surépaisseur *e* (qui partage la même valeur que celle de l'excentrique qui est prévu d'être appliqué à l'outil lors du soudage orbital) ; et
- fractionner la périphérie 11.1 en plusieurs points *i* à partir desquels les rayons *z_{i,α}* seront projetés, préférentiellement à environ 2000 points répartis de façon homogène (ce nombre pouvant varier selon la précision de calcul désirée) ; et
- projeter des rayons *z_{i,α}* qui balayent toute la section 11 depuis un premier point *i* de la périphérie 11.1, le nombre de rayons *z_{i,α}* projetés dépend préférentiellement d'un angle α compris entre 0.001° et 10° ; et
- mesurer la longueur moyenne *zᵢ* de tous les rayons *z_{i,α}* projetés à partir du premier point *i* ; et
- répéter l'étape de projection des rayons *z_{i,α}* ainsi que celle de la mesure de la longueur moyenne *zᵢ* , successivement pour tous points *i* de la périphérie 11.1 ; et
- évaluer toutes les longueurs moyennes *zᵢ* mesurées à partir de tous les points i pour déterminer la longueur moyenne maximale *zₘₐₓ* et la longueur moyenne minimale *zₘᵢₙ.*

Les deux points A et B ont été déterminés au moyen de la méthode de lancer de rayons décrite ci-avant, ils correspondent aux deux points qu'ont permis, respectivement, de retrouver la longueur moyenne maximale *zₘₐₓ* et la longueur moyenne minimale *zₘᵢₙ*, et cela, après avoir balayé la section 11 avec des rayons *z_{i,α}* depuis tous les points i de sa périphérie 11.1.

La figure 3 illustre la première section modélisée 11 de la figure 2 lors d'une détermination d'une longueur moyenne *z_{A}* de rayons *z_{A,α}* balayant ladite section 11 à partir d'un point A de la périphérie 11.1.

On peut voir que le point A est disposé au niveau d'une portion centrale de la section 11 à distance de deux extrémités 11.2, 11.3 de ladite section 11, suivant une corde de l'aube correspondante, et correspondant respectivement, à un bord d'attaque 4.2 et à un bord de fuite 4.3 (visibles à la figure 2) de ladite aube correspondante.

A partir du point A, une pluralité des rayons *z_{A,α}* sont projetés sur une portion de la périphérie 11.1 visible depuis ledit point A. Dans cette configuration, les rayons *z_{A,α}* peuvent être compris entre deux rayons extrêmes *z_{A,α}* qui sont tangents à la périphérie 11.1.

Le nombre de rayons *z_{A,α}* projetés peut dépendre de l'angle α choisit, ce dernier permet d'établir la précision de détermination du rayon moyen *z_{A}.* A cet effet, l'angle α peut être compris entre 0.001° et 10°. Préférentiellement, l'angle α est identique pour toutes les projections des rayons *z_{i,α}* pour la pluralité des points *i* de la périphérie 11.1.

La longueur moyenne *z_{A}* correspond ainsi à la moyenne de toutes les projections *z_{A,α}.* Dans cette configuration, la longueur moyenne *z_{A}* peut, par exemple, correspondre à la longueur moyenne maximale *zₘₐₓ.*

La figure 4 illustre la première section modélisée 11 de la figure 2 lors d'une détermination d'une longueur moyenne za de rayons *z_{B,α}* balayant ladite section 11 à partir d'un point B de la périphérie 11.1.

Similairement au point A, les rayons *z_{B,α}* sont projetés depuis le point B sur une portion de la périphérie 11.1 visible audit point B. Ainsi, la longueur moyenne za correspond à la moyenne des toutes les projections *z_{B,α}.*

Par exemple, la longueur moyenne za peut correspondre à la longueur moyenne minimale *zₘᵢₙ.* Il est à noter que même si le point B est illustré comme étant disposé à l'extrémité 11.3 de la section 11, celui-ci peut également être disposé au niveau de l'extrémité 11.2 et donner lieu à une longueur moyenne maximale.

Si le rapport de la longueur moyenne maximale *zₘₐₓ* sur la longueur moyenne minimale *zₘᵢₙ* est inférieur ou égal à 2, alors la première section modélisée 11 correspond à la section de jonction S (visible à la figure 1) qui sera utilisée lors du soudage orbital de l'aube au moignon. De manière alternative, si le rapport des longueurs moyennes (*zₘₐₓ*/*zₘᵢₙ*) est supérieur à 2, alors une troisième étape du procédé de dimensionnement des moignons est réalisée, ladite troisième étape comprenant un élargissement de la section modélisée 11, de manière à respecter le rapport : *zₘₐₓ*/*zₘᵢₙ* ≤ 2.

De manière avantageuse, les inventeurs ont découvert qu'en respectant un rapport entre *zₘₐₓ* et *zₘᵢₙ* qui soit inférieur ou égal à 2, et préférentiellement inférieur ou égal à 1,8, et encore plus préférentiellement inférieur ou égal à 1,5, la soudure entre l'aube et le moignon présente une meilleure qualité structurelle, exempt de contaminants et d'évidements. En effet, la détermination des longueurs moyennes *zᵢ*, en passant par les rayons projetés *z_{i,α},* pour respecter le rapport *zₘₐₓ* / *zₘᵢₙ* ≤ 2, permet de limiter de façon pertinente la présence d'une concavité trop importante au niveau de la section à souder qui peut risquer d'affecter négativement l'opération de soudage orbital. Avantageusement, le respect dudit rapport permet d'avoir une cambrure idéale de la section de jonction permettant l'obtention d'une soudure homogène et solide, tout en limitant les risques de recirculation de matière pendant le mouvement orbital et donc la mauvaise éjection de contaminants générés en début de phase de soudure.

De plus, la détermination et le respect d'un tel rapport est particulièrement pertinent pour des sections à souder par friction orbitale, car chacune les surfaces de la section 11 comprenant les rayons projetés *z_{i,α}* à partir de chaque point i peuvent être assimilées à des surfaces de malaxage de la matière pendant la soudure à friction orbitale.

En effet, l'effort de friction fourni lors du soudage tourne de façon cyclique, ce qui implique qu'un point de soudure à l'extrémité de la section 11 du moignon (e.g. point A ou B) voit une fraction de la section 11 de l'aube entre les deux rayons projetés extrêmes (*z_{A,α}* ou *z_{B,α}*), ces derniers peuvent donc être assimilés à longueurs équivalentes de matière à cisailler.

A cet égard, l'élargissement de la section modélisée 11 opte à diminuer la longueur moyenne maximale *zₘₐₓ* et/ou à augmenter la longueur moyenne minimale *zₘᵢₙ.*

La figure 5 illustre une deuxième section modélisée 12 résultant d'un élargissement de la première section modélisée 11 de la figure 3.

Dans cette configuration, on cherche à augmenter la longueur moyenne minimale *zₘᵢₙ,* ce qui revient à augmenter la valeur de la longueur moyenne za. A cet effet, l'élargissement de la première section 11 comprend l'ajout d'une deuxième surépaisseur, au niveau d'au moins un des deux extrémités 11.2 et 11.3 de ladite section 11 comprenant le point B à partir duquel la longueur moyenne minimale *zₘᵢₙ* a été déterminée.

L'élargissement peut être effectué manuellement au moyen d'un logiciel de modélisation, ou de manière automatisée par un algorithme informatique spécifique.

Après l'élargissement, le procédé de dimensionnement des moignons de l'invention prévoit de répéter la deuxième étape afin de redéterminer des longueurs moyennes *zᵢ* balayant la deuxième section 12 en tout point i de sa périphérie 12.1. Si le rapport : *zₘₐₓ* / *zₘᵢₙ* ≤ 2 est respecté, alors la deuxième section 12 sera la section de jonction utilisée pour le soudage orbital. Autrement, une troisième section sera modélisée de manière à façonner la surépaisseur d, i.e. diminuer ou augmenter cette dernière, et/ou ajouter une troisième surépaisseur afin de respecter le rapport entre *zₘₐₓ* et *zₘᵢₙ.* Il est à noter que différentes tentatives peuvent être nécessaires avant d'arriver à modéliser la section de jonction respectant le rapport. Ainsi, les deuxième et troisième étapes du procédé peuvent être réalisées de manière itérative.

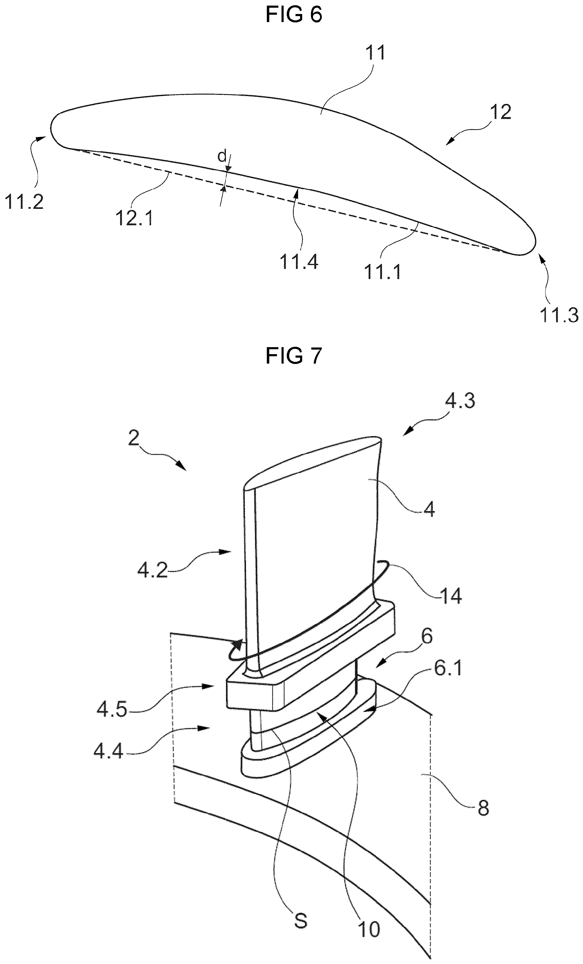

Alternativement, et en fonction du profil de la section modélisée, la longueur moyenne *z_{A}* mesurée à partir des projections *z_{A,α}* du point A de la figure 3, peut, par exemple, correspondre à la longueur moyenne minimale *zₘᵢₙ,* et la longueur moyenne *z_{B}* mesurée depuis les projections *z_{B,α}* du point B de la figure 4, peut, par exemple, correspondre à la longueur moyenne maximale *zₘₐₓ.* A cet effet, et comme illustré à la figure 6, la deuxième surépaisseur d peut être ajoutée au niveau d'une portion concave 11.4 de la section 11, au lieu des deux extrémités 11.2 et 11.3.

Il est à noter que la présente invention ne se limite pas aux exemples illustrés. En effet, les longueurs moyennes minimales et maximales peuvent être relatives à des points différents aux points A et B illustrés aux figures 3 et 4, des points qui peuvent changer avec chaque élargissement de la section.

La figure 7 représente de manière schématique une vue en perspective, lors de la soudure à friction orbitale, de l'aube au moignon du disque, au moyen de la section de jonction.

Préférentiellement, l'aube 4 comprend au droit de son extrémité inférieure 4.4 un renfort 4.5 qui sera usiné postérieurement à l'opération de soudage conjointement avec un volume 6.1 de renfort du moignon 6 sur le disque 2.

Préalablement au soudage par friction orbitale au moyen d'un mouvement d'oscillation orbital 14, un volume de matière sacrificiel (s'étendant essentiellement radialement) est prévu sur chacun des aubes 4 et des moignons 6 à assembler. Ce volume sacrificiel est amené à être expulsé en dehors d'une jonction 10 correspondant à l'interface de contact entre les deux sections de jonction S, formant ainsi une bavure, communément désignée par : « flash », qui sera ensuite éliminée, de préférence, par usinage, afin d'arriver à la section finale (correspondant au profil aérodynamique 4.1 visible à la figure 2) pour former le disque aubagé.

Toutefois, dans le cas où des moignons de l'état de l'art comprenant des sections non-dimensionnées suivant le procédé de l'invention, le flash risque d'entraîner une recirculation de matière à l'intérieur des régions desdites sections les plus étroites et risque de créer des évidements dans la jonction soudée, ce qui nuit à la qualité de la soudure.

De manière avantageuse, le dimensionnement de la section de jonction S en respectant le rapport de la longueur moyenne maximale *zₘₐₓ* sur la longueur moyenne minimale *zₘᵢₙ* qui soit inférieur ou égal à 2, notamment à la suite d'un élargissement par rapport à la section finale, permet d'agrandir la surface de contact lors du soudage par friction orbitale de manière à assurer une homogénéité thermique pendant la soudure, précisément dans la section finale 4.1 de l'aube 4. En effet, si on ajoute une surépaisseur e à minima égale à la valeur de l'excentrique, cela signifie que les points de la surface aérodynamique finale 4.1 sont toujours en contact pendant la soudure (entre les deux moignons). Contrairement aux points dans cette surépaisseur e qui, par le mouvement orbital, ne sont en contact avec la surface opposée que pendant une partie du mouvement d'oscillation orbitale.

Ainsi, pendant la soudure, une vitesse de consommation de matière demeure constante au droit de la section de jonction S, ce qui permet d'éviter la recirculation de la matière (potentiellement nocive car elle empêche l'évacuation des impuretés) au niveau de la section du profil final aérodynamique 4.1 de l'aube et ainsi permettre une homogénéité et une continuité du malaxage de la matière du moignon avec celle de l'aube permettant de préserver davantage le profil aérodynamique de l'aube et d'obtenir une jonction résistante.

Préférentiellement, la section de jonction S de chacun des aube 4 et moignon 6, comprend une surface totale supérieure ou égale à 200 mm² et inférieure ou égale à 7000 mm², et plus préférentiellement comprise entre 2000 mm² et 3000 mm².

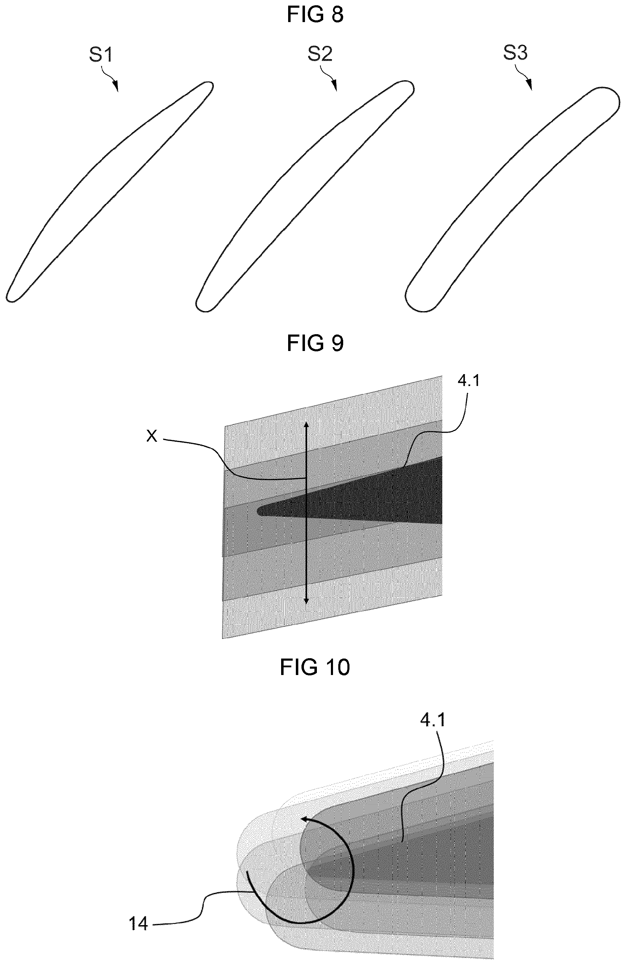

La figure 8 représente plusieurs géométries S1, S2 et S3 de moignon construites autour d'un profil aérodynamique d'une aube qui n'est pas représentée. Les sections S1, S2, S3 ont préférentiellement toutes la même valeur de l'aire en mm². L'objectif de cette comparaison est de montrer que pour des profils présentant des ratio *zₘₐₓ*/ *zₘᵢₙ* au-dessus ou répondant au critère (inférieur ou égal à 2), les contaminants créés dans la toute première phase de la soudure orbitale sont évacués avec plus ou moins d'efficacité. Cela sera davantage expliqué suivant une table 1 ci-après.

La figure 9 représente les mouvements relatifs des sections à souder correspondants à l'état de l'art antérieur (soudure linéaire) dans une direction X perpendiculaire à la corde du profil de l'aubage.

La section de l'art antérieur correspond ici à une section telle que proposée par le document de brevet publié EP 1 495 829 A1, i.e. dans lequel chaque extrémité de la zone de bord avant et arrière comprend un excédent de matière qui se termine par un bord droit aligné parallèlement à la direction d'oscillation X du soudage par friction linéaire.

La figure 10 représente des mouvements relatifs de deux sections selon l'invention lors du soudage par friction orbitale. Cette figure schématise la différence fondamentale avec l'art antérieur (friction linéaire) et permet de mieux comprendre les mouvements relatifs des deux sections à souder dans le cadre d'une soudure orbitale.

**Table 1 :**

| | S0 | S1 | S2 | S3 | Cercle |
|---|---|---|---|---|---|
| *zₘₐₓ*/ *zₘᵢₙ* | 2.15 | 1.94 | 1.73 | 1.53 | 1 |
| Art antérieur (wₘₐₓ/wₘᵢₙ) | 5.64 | 3.02 | 1.94 | 1 | |
| Etat de la soudure | NOK | OK | OK | OK | OK |

La figure 8 illustre les sections S1, S2 et S3 de la table 1 qui donne les valeurs de *zₘₐₓ*/ *zₘᵢₙ.*

Le ratio wₘₐₓ/wₘᵢₙ de l'art antérieur correspond ici à un critère exposé dans le document de brevet publié EP 1 495 829 A1, i.e. comprenant notamment une section de moignon ayant un rapport de la partie la plus large (largeur wₘₐₓ) sur la partie la plus étroite (largeur wₘᵢₙ) qui est inférieure à 2.

Un état de soudure qualifié « OK » indique une soudure saine et exempte de contaminants, tandis qu'un état « NOK » correspond à une soudure contenant des contaminants qui n'ont pas été évacués de la jonction pendant la friction orbitale.

On peut voir à partir du tableau que les sections S1, S2 et S3 présentant un ratio *zₘₐₓ*/*zₘᵢₙ* inférieur à 2, permettent d'obtenir une jonction soudée dont l'état de santé est « OK », tandis que la section S0 (non illustrée) dont le ratio *zₘₐₓ*/*zₘᵢₙ* est inférieur à 2, conduit à un état de la jonction soudée qualifié non conforme « NOK ».

Dans le cas de la section S1, on peut voir que le critère (wₘₐₓ/wₘᵢₙ < 2) établi par l'art antérieur n'est pas respecté et apporte cependant une soudure conforme.

En effet, la section de l'art antérieur n'est pas adaptée au soudage orbital. Cela peut notamment être expliqué par le fait que les largeurs prises en compte dans la mesure du rapport de largeurs proposé par le document EP 1 495 829 A1, ont été mesurées suivant une direction de friction linéaire (direction X de la figure 9). Or, le soudage orbital ne se limite pas à une seule direction de friction linéaire, mais englobe plutôt toutes les directions, car le malaxage de matière se fait à 360° en soudage orbital. En général, il est important de noter qu'une configuration où deux sections à souder ont une forme de cercle parfait permet d'obtenir un soudage orbital optimal. Cette configuration assure un malaxage parfaitement homogène et constant, ce qui garantit une montée en température stable des matériaux. De plus, la forme circulaire des sections permet une uniformité de la friction sur 360°, sans changement de forme. La forme circulaire n'est pas calculable avec le critère de l'art antérieur.

Les inventeurs ont eu la démarche inventive d'introduire la méthode de lancer de rayons (ray tracing) décrite ci-avant, une technique non conventionnelle dans le domaine de la mécanique, pour caractériser la section de jonction afin de prendre en considération toutes les directions de friction. En effet, le balayage de la section avec des rayons *z_{i,α}* lancés depuis chacun de tous les points *i* de sa périphérie, s'apparente aux mouvements de malaxage de matière entre les surfaces en contact lors du soudage orbital, lesdits mouvement étant suivant toutes les directions et sur 360°.

Les inventeurs ont par la suite déterminé que lorsque le ratio *zₘₐₓ*/*zₘᵢₙ* est inférieur ou égal à 2, d'éventuelles zones de contraintes au niveau de la forme de la section qui peuvent causer une recirculation de matière dans la soudure, sont évitées de manière intrinsèque.

Avantageusement, le ratio *zₘₐₓ*/*zₘᵢₙ* inférieur ou égal à 2 permet d'obtenir une forme générale de la section de jonction qui garantit un état de soudure « OK ».

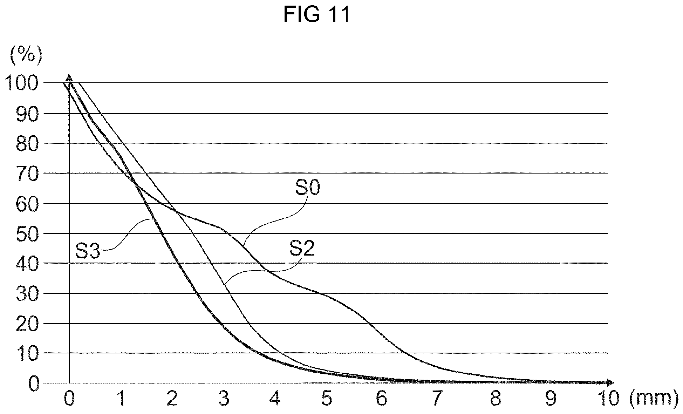

La figure 11 représente la vitesse d'éjection des premières couches de matière en contact et exprime ainsi la vitesse d'éjection des contaminants. L'axe des abscisses représente une valeur normée de la consommation matière (en mm) et l'axe des ordonnées représente le % de matière des couches en contact initial lors de la soudure (pouvant être assimilé à un % de contaminants présents sur la surface). Ce résultat est obtenu par simulation numérique.

On peut voir un tracé pour chacun des trois sections de jonction S0, S2 et S3.

Les soudures ont été réalisées sur une même machine et avec des paramètres de soudage constants, i.e. excentricité, fréquence d'oscillation, vitesse et pression de forgeage qui demeurent inchangés, seule la forme des sections est modifiée.

On observe une plus grande vitesse d'éjection des contaminants lorsque les sections sont dimensionnées selon le procédé de l'invention avec un ratio *zₘₐₓ*/*zₘᵢₙ* inférieur ou égal à 2, tandis que la présence de contaminants persiste plus longtemps lorsque le ratio dépasse 2.

En effet, les sections S2 et S3 respectant le critère selon l'invention, ont besoin d'une consommation de matière (des deux moignons soudés) qui est inférieure à 7 mm afin d'évacuer tous les contaminants de la soudure. Tandis que la section S0 ne respectant pas le critère selon l'invention, nécessite une consommation de matière de plus de 9 mm, et n'arrive pas à éliminer l'intégralité des contaminants.

Avantageusement, le soudage par friction orbitale de deux sections S2 identiques (présentant un ratio *zₘₐₓ*/*zₘᵢₙ* égal à 1.73), permet d'obtenir une soudure optimale, car les particules de contaminants restantes s'échappent rapidement et en grande quantité, résultant en une faible consommation de matière et une jonction soudée exempte de contaminants. Le constat est le même pour un soudage de deux sections S3 identiques (ayant un ratio égal à 1.53).

Tandis qu'un soudage orbital de deux sections S0 (ayant un ratio de 2.15), ne permet pas d'évacuer tous les contaminants avec la même vitesse, et nécessite donc une grande consommation de matière pour arriver à évacuer les particules restantes.

Ainsi, lorsque le ratio *zₘₐₓ*/*zₘᵢₙ* est inférieur ou égal à 2, les contaminants s'échappent rapidement de la jonction soudée et en grande quantité, résultant en une consommation de matière réduite. Par conséquent, le volume de matière sacrificiel nécessaire entre l'aube et le disque peut être considérablement minimisé lorsque la section de jonction est dimensionnée selon l'invention.

## Revendications

1. Procédé de dimensionnement d'une section (S) de jonction (10) par soudure par friction orbitale entre une aube (4) et un moignon (6) d'un disque aubagé pour turbomachine, **caractérisé en ce que** la section (S) est dimensionnée de manière à ce que le rapport entre une longueur moyenne de rayons s'étendant totalement dans la section (S) depuis un point (A, B) à la périphérie (11.1) de ladite section (S) et balayant ladite section (S), où ladite longueur moyenne de rayons est une longueur moyenne maximale *zₘₐₓ*, et une longueur moyenne de rayons s'étendant totalement dans la section (S) depuis un autre point (A, B) à la périphérie (11.1) de ladite section (S) et balayant ladite section (S), où ladite longueur moyenne est une longueur moyenne minimale *zₘᵢₙ*, est inférieur ou égal à 2.

2. Procédé de dimensionnement selon la revendication 1, dans lequel l'autre point (A, B) à la périphérie de la section où la longueur moyenne de rayons est maximale *zₘₐₓ* est situé à distance de deux extrémités (11.2, 11.3) de la section (S), suivant une corde de l'aube (4) correspondante, et correspondant à un bord d'attaque (4.2) et à un bord de fuite (4.3) de ladite aube (4) correspondante.

3. Procédé de dimensionnement selon l'une des revendications 1 et 2, dans lequel le point (A, B) à la périphérie (11.1) de la section (S) où la longueur moyenne de rayons est minimale *zₘᵢₙ* est situé à une extrémité (11.2, 11.3) de la section (S), suivant une corde de l'aube (4) correspondante et correspondant à un bord d'attaque (4.2) ou à un bord de fuite (4.3) de ladite aube (4) correspondante.

4. Procédé de dimensionnement selon l'une des revendications 1 à 3, dans lequel la section (S) des moignons (6) au niveau de la jonction (10) avec les aubes (4) est dimensionnée en élargissant ladite section (S) par rapport à une section finale (4.1) après jonction des aubes (4) et usinage.

5. Procédé de dimensionnement selon la revendication 4, dans lequel la section (S) des moignons (6) au niveau de la jonction (10) avec les aubes (4) est élargie par rapport à la section finale (4.1) à au moins une des deux extrémités (11.2, 11.3) de la section (S).

6. Procédé de dimensionnement selon l'une des revendications 1 à 5, dans lequel le dimensionnement de la section (S) des moignons (6) au niveau de la jonction (10) avec les aubes (4) comprend un calcul de la longueur moyenne de rayons pour une série de points distribués le long de la périphérie (11.1), respectivement et une détermination de la longueur moyenne de rayons maximale *zₘₐₓ* et de la longueur moyenne de rayons minimale *zₘᵢₙ* parmi les longueurs moyennes de rayons de la série de points.

7. Procédé de dimensionnement selon l'une des revendications 1 à 6, dans lequel le dimensionnement de la section (S) des moignons (6) au niveau de la jonction (10) avec les aubes (4) comprend une détermination de la longueur moyenne de rayons maximale *zₘₐₓ* et de la longueur moyenne de rayons minimale *zₘᵢₙ* pour différentes sections (11, 12), de manière itérative.

8. Procédé de fabrication d'un disque aubagé de turbomachine comprenant les étapes suivantes :
- mise à disposition d'un disque (2) avec des moignons (6) ;
- jonction d'aubes (4) aux moignons (6) par soudure par friction orbitale ; **caractérisé en ce que** les moignons (6) du disque (2) sont dimensionnés suivant l'une des revendications 1 à 7.

9. Procédé de fabrication selon la revendication 8, dans lequel les moignons (6) sont dimensionnés selon l'une des revendications 4 et 5 et comprenant l'étape supplémentaire :
- usinage des moignons (6) et des aubes (4) jointes aux moignons (6) de manière à retirer l'élargissement et arriver à la section finale (4.1).

10. Disque rotorique (2) destiné à la fabrication d'un disque aubagé pour une turbomachine, le disque rotorique (2) comprenant une surface externe (8) pourvue d'une rangée annulaire de moignons (6) s'étendant radialement depuis ladite surface externe (8), chacun des moignons (6) comprenant une section (S) destinée à être soudée par friction orbitale avec une aube (4), **caractérisé en ce que** lesdits moignons (6) sont dimensionnés par le procédé de dimensionnement selon l'une des revendications 1 à 8.

11. Disque rotorique (2) selon la revendication 11, **caractérisé en ce que** la section (S) est comprise entre 200 mm² et 7000 mm².

12. Disque rotorique (2) selon l'une des revendications 11 ou 12, **caractérisé en ce que** la section (S) est comprise entre 2000 mm² et 3000 mm².

13. Aube (4) destinée à la fabrication d'un disque aubagé pour une turbomachine, l'aube (4) comprenant une face (S) destinée à être soudée par friction orbitale avec un disque rotorique (2), **caractérisé en ce que** ladite face (S) présente une section (S) dimensionnée par le procédé de dimensionnement selon l'une des revendications 1 à 8.

14. Aube (4) selon la revendication 9, **caractérisée en ce que** la section (S) est comprise entre 200 mm² et 7000 mm².

15. Aube (4) selon l'une des revendications 9 ou 10, **caractérisée en ce que** la section (S) est comprise entre 2000 mm² et 3000 mm².
